# FASCICULE DE BREVET EUROPEEN

(11) **EP 1 790 421 B1**
(45) Date de publication et mention de la délivrance du brevet: **10.05.2017**
(21) Numéro de dépôt: 06024182.5
(22) Date de dépôt: 22.11.2006
(51) Int. Cl.: B06B 1/16

(54) **Dispositif d'asservissement pour un vibrateur à rotors déséquilibrés**
Vorrichtung zur Regelung eines Vibrators mit Ungleichgewichtrotoren
Device to control a vibrator having unbalanced rotors

(30) Priorité: 28.11.2005 FR 0512055
(43) Date de publication de la demande: 30.05.2007
(73) Titulaire: Airbus Helicopters, 13725 Marignane Cedex (FR)
(72) Inventeur: Clary, Sylvain, 64000 Pau (FR)
(74) Mandataire: GPI & Associés

(56) Documents cités:
- EP-A- 0 409 462
- WO-A-2004/087343
- US-B1- 6 212 445

## Description

La présente invention est relative à un dispositif -ou système-d'asservissement pour un vibrateur -ou générateur d'efforts- à rotors déséquilibrés.

Le domaine technique de l'invention est celui de l'atténuation active des vibrations à bord des hélicoptères et autres aéronefs à voilure tournante.

Il est connu d'équiper de tels aéronefs d'actionneurs destinés à supprimer ou atténuer les vibrations de l'aéronef qui résultent notamment d'efforts alternatifs appliqués au fuselage de l'aéronef par le mécanisme (rotor notamment) de sustentation et de propulsion de l'aéronef.

A cet effet, on mesure les vibrations de l'aéronef à l'aide d'au moins un accéléromètre délivrant un signal de mesure de vibrations, on traite ce signal de mesure par des moyens de traitement pouvant inclure un algorithme enregistré dans une carte électronique ou un calculateur embarqué(e), de façon à obtenir un signal de commande que l'on applique à l'actionneur pour générer des efforts s'opposant aux vibrations mesurées, comme décrit par exemple dans le brevet US5473698.

Ces efforts peuvent résulter du mouvement de battement d'une masse montée mobile en translation par rapport à la structure de l'aéronef et mue par un actionneur électromagnétique linéaire ; il est également connu d'utiliser un actionneur rotatif comportant des rotors déséquilibrés (à balourds) pour produire ces efforts par effet centrifuge, comme décrit par exemple dans le brevet US5005439.

Le document US6212445 décrit un dispositif d'asservissement de vibrateur qui comporte une première paire de rotors déséquilibrés entraînée en rotation par un premier moteur électrique ainsi qu'une deuxième paire de rotors déséquilibrés entraînée en rotation par un second moteur électrique. Le dispositif d'asservissement comporte un premier capteur de position angulaire du premier moteur électrique et un second capteur de position angulaire du premier moteur électrique.

La revendication 1 définit un dispositif d'asservissement selon l'invention qui s'applique en particulier aux vibrateurs comportant deux paires de rotors déséquilibrés (ou masselottes) dans lesquels les rotors de chaque paire sont contrarotatifs et synchrones, les axes de rotation des quatre rotors étant parallèles, les rotors (plats) ou masselottes s'étendant sensiblement le long d'un plan commun orthogonal aux axes de rotation des rotors.

La synchronisation - permanente - des deux rotors contrarotatifs de chacune des paires de rotors peut être obtenue électroniquement ; c'est le cas des vibrateurs comportant un moteur électrique associé à chaque rotor pour assurer son entraînement en rotation, comme ceux décrits dans les brevets FR2606110, EP505976 et EP1439010 ; dans le document FR2606110, un filtre de kalman reçoit un signal vibratoire délivré par un accéléromètre et fournit un signal représentatif de la fréquence, de l'amplitude et de la phase du système vibrant comprenant l'appareil vibrant et le vibrateur (ou « antivibrateur) ; à partir de ce signal, un calculateur commande la vitesse et la phase de chaque moteur, par l'intermédiaire d'un comparateur ; dans le document EP505976, il est précisé que le filtre de kalman produit une estimée de la force à compenser et de sa pulsation ainsi qu'une force en quadrature ; ces données sont délivrées à un bloc de calcul qui en déduit la valeur d'un demi déphasage à partir duquel sont calculées quatre consignes de vitesses qui sont transformées en quatre tensions d'alimentation ; par ailleurs, un module de calcul utilise les signaux provenant de quatre codeurs angulaires pour produire un signal image de la force résultante générée par les masselottes ; ce dernier signal est sommé avec un signal résiduel d'accélération, le résultat étant appliqué en entrée du filtre de kalman.

Le système décrit dans EP1439010 comporte, pour chaque roue déséquilibrée, un capteur délivrant un signal à chaque tour de roue pour une position caractéristique du balourd, et comporte un processeur de signaux recevant un signal de consigne ; une impulsion de référence de phase est produite lors d'un passage (ascendant) par zéro du signal de consigne ; à partir de ces signaux, des signaux d'erreur de vitesse et d'erreur de phase sont calculés pour chaque rotor ; par ailleurs, deux signaux de consigne de phase sont calculés à partir de la norme de l'amplitude du signal de consigne ; à partir de ces signaux, un signal de commande de vitesse et un signal de commande de phase, avec correction proportionnelle et intégrale, sont sommés pour former, pour chaque moteur, un signal de commande.

Ces générateurs et leurs systèmes de commande de moteur sont complexes.

La synchronisation des rotors de chacune des paires de rotors peut aussi être mécanique, au moyen d'engrenages comme décrit notamment dans le brevet EP840191, ou au moyen d'une courroie comme décrit notamment dans la demande internationale WO2004/087343.

Dans ces générateurs de vibrations, un premier moteur électrique est utilisé pour entraîner les rotors en rotation, tandis qu'un second moteur électrique est utilisé pour ajuster/entraîner un mécanisme déphaseur et/ou différentiel qui permet de régler mécaniquement un déphasage entre un premier couple de rotor synchrones et un second couple de rotors synchrones.

C'est plus particulièrement à ce type de vibrateurs que s'applique l'invention qui a pour but de proposer un système simple d'asservissement du vibrateur à un signal de consigne.

Un objectif de l'invention est de proposer un système stable et robuste d'asservissement de tels vibrateurs à un signal de consigne d'effort dont la fréquence et l'amplitude sont variables au cours du temps.

Un objectif de l'invention est de proposer un dispositif simple et performant pour l'asservissement d'un vibrateur comportant quatre rotors déséquilibrés entraînés par un premier moteur et dont le déphasage est ajusté mécaniquement par un dispositif entraîné par un second moteur.

Selon un aspect de l'invention, il est proposé un tel dispositif d'asservissement qui comporte :
- un premier capteur sensible à la position angulaire d'un rotor de la première paire de rotors,
- un second capteur sensible à la position angulaire d'un rotor de la seconde paire de rotors ou bien à la position du mécanisme déphaseur,
- un premier moyen de commande pour commander le premier moteur en fonction de la phase et de la fréquence du signal de consigne d'effort ainsi que des signaux délivrés par les premier et second capteurs,
- un second moyen de commande pour commander le second moteur en fonction de la phase, de la fréquence, et de l'amplitude du signal de consigne d'effort ainsi que des signaux délivrés par les premier et second capteurs.

Selon des modes préférés de réalisation de l'invention :
- le second moyen de commande comporte des moyens de calcul d'une consigne (ϕco) de déphasage entre les deux paires de rotors en fonction de la fréquence (Fco) et de l'amplitude (Uco) du signal de consigne d'effort, ainsi qu'un premier moyen de comparaison pour comparer la consigne calculée (ϕco) de déphasage et le déphasage mesuré (ϕm) entre les deux paires de rotors et délivrer un signal de commande du second moteur ;
- la consigne (ϕco) de déphasage entre les deux paires de rotors est déterminée selon la formule ϕco=Arcos(Uco/Umax*Amax/(16*m*r*π²*Fco²)) où m et r sont respectivement la masse et l'excentricité du balourd des rotors, Amax est l'effort maximal que peut exercer le vibrateur et Umax est l'amplitude du signal de consigne d'effort correspondant à cet effort maximal ;
- le second moyen de commande comporte des moyens de limitation du déphasage entre les deux paires de rotor -en particulier des moyens de maintien d'un déphasage sensiblement égal à 180° entre les deux paires de rotors- tant que l'écart entre la fréquence de rotation des rotors et la fréquence du signal de consigne est supérieur à une valeur prédéterminée ; ceci permet de maintenir un effort nul pendant le démarrage des masselottes en opposant les efforts générés par les deux couples.

- le second moyen de commande comporte un premier régulateur recevant un signal délivré par le premier moyen de comparaison et délivrant en sortie un signal de commande du second moteur ;
- le premier moyen de commande comporte des moyens de mesure d'un déphasage pour déterminer un déphasage mesuré (ψm) entre l'effort généré par le vibrateur et le signal de consigne d'effort et pour commander le premier moteur en fonction de ce déphasage ;
- le dispositif comporte un premier moyen de mesure de fréquence pour mesurer la fréquence (Fco) du signal de consigne d'effort, un second moyen de mesure de fréquence pour mesurer la fréquence (Fm) de rotation d'une des paires de rotors en fonction des signaux délivrés par le premier capteur, et un second moyen de comparaison pour comparer les dites fréquences (Fco et Fm) et délivrer un signal de comparaison pour la commande du premier moteur ;
- le premier moyen de commande comporte un second régulateur recevant un signal délivré par le second moyen de comparaison, un troisième régulateur recevant un signal délivré par les moyens de mesure de déphasage, ainsi qu'un sommateur recevant les signaux délivrés par les second et troisième régulateurs et délivrant en sortie un signal (COM1) de commande du premier moteur ;
- le dispositif comporte des moyens de maintien en sortie du troisième régulateur d'un signal sensiblement nul tant que l'écart entre la fréquence de rotation des rotors et la fréquence du signal de consigne est supérieur à une valeur prédéterminée ;
- le dispositif présente une dynamique de réponse au moins égale à 100 Hertz, par exemple de l'ordre de 200 Hz environ ; la dynamique varie en proportion avec la fréquence de l'effort à générer.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.
La figure 1 illustre le principe de fonctionnement d'un vibrateur auquel s'applique l'invention.
La figure 2 est un schéma d'un premier mode préféré de réalisation d'un dispositif selon l'invention.
La figure 3 est un schéma illustrant partiellement une variante de réalisation de l'invention dans laquelle un seul détecteur de rotation des rotors est utilisé, le dispositif comportant en outre un capteur de position d'un mécanisme déphaseur.
La figure 4 illustre la variation de l'effort (en ordonnée) généré par un vibrateur commandé par un dispositif selon l'invention, en fonction de la vitesse (en abscisse) de rotation des rotors, selon trois variantes de réalisation.

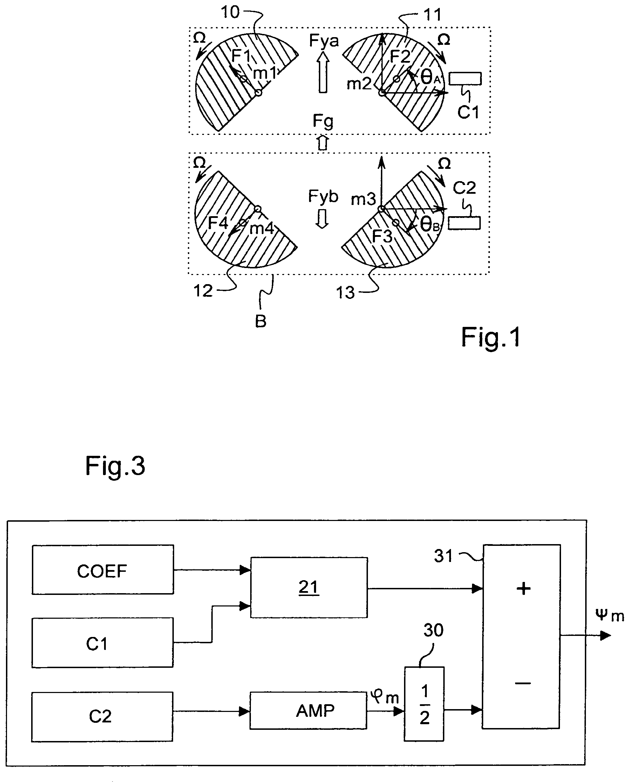

Par référence à la figure 1, le dispositif d'asservissement comporte un premier capteur C1 sensible à la position angulaire θA du rotor 11 de la première paire A comportant les rotors 10 et 11 synchrones et contrarotatifs, dont les balourds résultent en un effort vibratoire dirigé selon la flèche Fya ; le dispositif comporte un second capteur C2 sensible à la position angulaire θB d'un rotor 13 de la seconde paire B comportant les rotors 12 et 13 synchrones et contrarotatifs dont les balourds résultent en un effort vibratoire dirigé selon la flèche Fyb.

Dans la variante correspondant à la figure 3, le capteur C2 est sensible à la position d'un mécanisme permettant de régler le déphasage entre la première paire de rotors et la seconde paire de rotors.

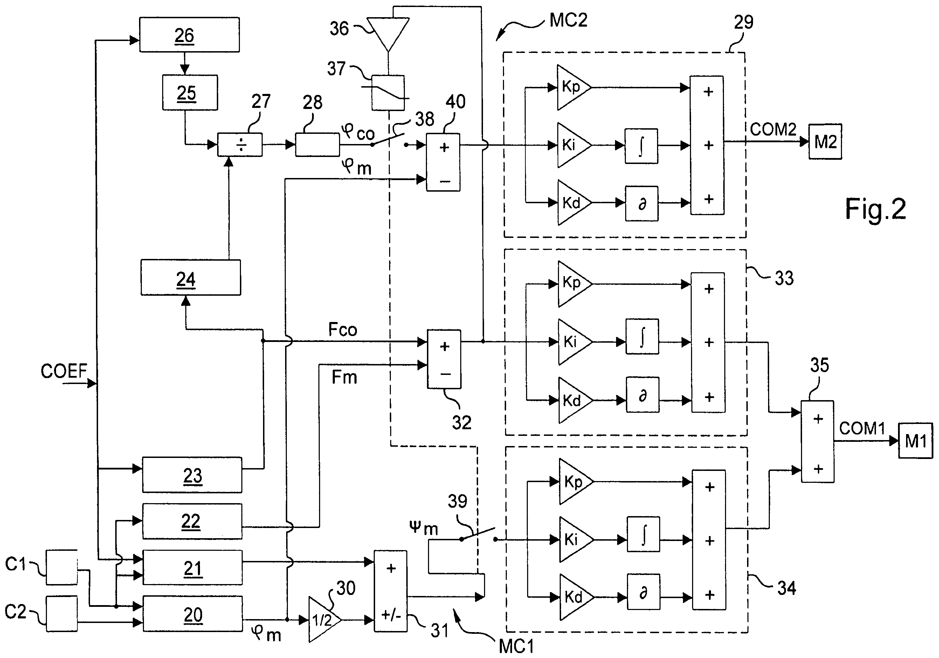

Par référence à la figure 2, le dispositif d'asservissement comporte un premier moyen de commande MC1 pour commander le premier moteur M1 en fonction de la phase et de la fréquence du signal de consigne d'effort COEF ainsi que des signaux délivrés par les capteurs C1 et C2, ainsi qu'un second moyen de commande MC2 pour commander le second moteur en fonction de la phase, de la fréquence, et de l'amplitude du signal de consigne d'effort ainsi que des signaux délivrés par les capteurs C1 et C2.

Le second moyen de commande MC2 comporte des moyens de calcul d'une consigne (ϕco) de déphasage entre les deux paires de rotors en fonction de la fréquence (Fco) et de l'amplitude (Uco) du signal de consigne d'effort COEF, qui comportent :
- un convertisseur fréquence /tension 26 recevant en entrée le signal COEF et délivrant en sortie l'amplitude Uco de ce signal ;
- deux amplificateurs 24 et 25 de gains respectivement égaux à Amax/Umax et 16*m*r*π²*Fco², recevant respectivement en entrée les signaux ou données délivré(e)s par les modules 23 et 26, et dont les sorties sont reliées aux deux entrées d'un diviseur 27 ; et
- un module 28 de calcul de la fonction trigonométrique Arcos, dont l'entrée reçoit la sortie du diviseur 27, et qui délivre en sortie la consigne ϕco de déphasage entre les deux paires de rotors.

Ce déphasage est ainsi déterminé selon la formule ϕco=Arcos(Uco/Umax*Amax/(16*m*r*π²*Fco²)), où m et r sont respectivement la masse et l'excentricité du balourd des rotors, Amax est l'effort maximal que peut exercer le vibrateur et Umax est l'amplitude du signal de consigne d'effort correspondant à cet effort maximal.

Le second moyen de commande MC2 comporte également un premier comparateur 40 pour comparer la consigne calculée ϕco de déphasage et le déphasage mesuré ϕm entre les deux paires de rotors, et pour délivrer un signal de commande du second moteur M2 à l'entrée d'un régulateur 29 délivrant un signal de commande régulé COM2.

Le second moyen de commande MC2 comporte en outre des moyens de limitation du déphasage entre les deux paires de rotor -en particulier des moyens de maintien d'un déphasage de sensiblement 180° entre les deux paires de rotors- tant que l'écart entre la fréquence de rotation des rotors et la fréquence du signal de consigne est supérieur à une valeur prédéterminée.

Ces moyens de limitation comportent un amplificateur 36 recevant en entrée un signal correspondant à la différence entre la fréquence de consigne Fco et la fréquence mesurée Fm de rotation des rotors ; la sortie de l'amplificateur commande un actionneur 37 de commande d'ouverture et de fermeture d'interrupteurs 38 et 39 dont la fonction est précisée plus loin.

Le premier moyen de commande MC1 comporte des moyens de mesure d'un déphasage pour déterminer un déphasage mesuré (ψm) entre l'effort généré par le vibrateur et le signal de consigne d'effort et pour commander le premier moteur en fonction de ce déphasage ; ces moyens comportent un amplificateur 30 de gain égal à ½ et un additionneur 31 ; l'additionneur 31 reçoit en entrée la différence de phase mesurée entre le signal COEF et le capteur C1 par un comparateur de phase 21.

Un autre comparateur de phase 20 recevant en entrée les signaux des capteurs C1 et C2, produit en sortie la différence de phase correspondante mesurée ϕm qui est appliquée en entrée de l'amplificateur 30 ; la sortie de cet amplificateur est appliquée sur la seconde entrée de l'additionneur 31.

Dans la variante illustrée figure 3, on retrouve l'amplificateur 30 et l'additionneur 31 pour le calcul du déphasage mesuré ψm, ainsi que le comparateur de phase 21 ; le déphasage ϕm est ici directement obtenu en sortie d'un organe AMP de mise en forme et d'amplification du signal délivré par le capteur C2 sensible au déphasage entre les deux paires de rotors.

Le dispositif comporte un premier moyen 23 de mesure de fréquence pour mesurer la fréquence Fco du signal de consigne d'effort, un second moyen 22 de mesure de fréquence pour mesurer la fréquence Fm de rotation d'une des paires de rotors en fonction des signaux délivrés par le premier capteur, et un second moyen 32 de comparaison pour comparer les dites fréquences (Fco et Fm) et délivrer un signal de comparaison pour la commande du premier moteur.

Le premier moyen de commande MC1 comporte un second régulateur PID 33 recevant un signal délivré par le second moyen 32 de comparaison, un troisième régulateur PID 34 recevant un signal délivré par les moyens 30, 31 de mesure de déphasage, ainsi qu'un sommateur 35 recevant les signaux délivrés par les second et troisième régulateurs et délivrant en sortie un signal COM1 de commande du premier moteur M1.

L'asservissement proposé est adapté à un entraînement mécanique des rotors à masselottes du vibrateur, par l'intermédiaire d'une courroie ou d'un train épicycloïdal par exemple. Dans ce type de vibrateur, l'entraînement des rotors peut être réalisé par un moteur à courant continu ou « brushless » ; la fonction principale de l'asservissement de ce moteur est de faire tourner les « masselottes » à la fréquence d'un signal de consigne d'effort, et avec un déphasage nul par rapport à ce signal.

Le déphasage entre les deux paires de rotors peut être réalisé par l'intermédiaire d'un moteur à courant continu ou d'un moteur pas à pas, l'objectif de l'asservissement de ce moteur étant de contrôler le module de l'effort généré par le vibrateur à masselottes.

Le système selon l'invention réalise deux fonctions principales : extraction de données (amplitude, phase et fréquence) à partir du signal de consigne d'effort, et élaboration des signaux de commande des deux moteurs en fonction de ces données, la phase du signal de consigne d'effort étant prise comme référence de phase.

L'invention permet d'utiliser (indirectement) l'amplitude du signal de consigne d'effort pour commander le moteur d'entraînement des rotors ; en effet, lors d'une variation de cette amplitude, la phase de l'effort généré va varier ; l'invention permet d'anticiper les variations de phase et d'obtenir une réponse rapide sur l'effort généré.

La technologie utilisée pour réaliser le dispositif peut être essentiellement analogique, ce qui peut permettre de réduire le coût de l'asservissement ; l'utilisation de circuits numériques est également possible.

Le modèle analytique du vibrateur est le suivant :

F=4mrΩ²cos(ϕ(t))cos(2πF0*t+Ψ(t)), où t représente le temps, F représente l'effort généré (F = Fya + Fyb), ϕ (ϕ = θA - θB) représente le déphasage entre les deux couples de masselottes, Ψ (Ψ = (θA + θB)/2) représente le déphasage entre l'effort généré et la commande, F0 représente la fréquence de l'effort généré, et Ω= 2πF0 représente la pulsation de l'effort en radian par seconde.

L'amplitude de l'effort généré dépend donc de la fréquence de l'effort et du déphasage entre les deux couples de masselottes

Avec le type d'actionneur auquel est destiné cet asservissement, il y a un couplage mécanique figé entre les deux masselottes d'une même paire, qui impose un mouvement contrarotatif de ces deux masselottes. Les autres systèmes nécessitent un asservissement électronique pour réaliser cette fonction.

Le dispositif (cf. fig. 2) comporte un module d'extraction des données permettant d'extraire du signal de consigne les données utiles pour l'asservissement des deux moteurs.

Le signal d'entrée COEF peut être filtré (par un filtre passe bande) afin de sélectionner la bande fréquentielle de fonctionnement de l'actionneur et limiter les problèmes de parasites.

Le signal COEF de consigne d'effort est analysé afin d'en extraire la fréquence, l'amplitude, et la phase ; la fréquence Fco du signal COEF est déterminée par un convertisseur (analogique) fréquence/tension ou bien par des compteurs remis à zéro à chaque front montant du signal (solution numérique) ; l'amplitude est déterminée par un composant type RMS (analogique), ou bien par calcul de l'intégrale « glissante » sur une durée d'une période ; ce calcul permet d'obtenir une information fiable et remise à jour en permanence et nécessite moins de temps de calcul qu'une transformée de Fourrier discrète ; la phase du signal COEF sert de référence pour la synchronisation de l'asservissement : les fronts montants du signal de consigne sont utilisés pour synchroniser l'effort généré avec la consigne.

Les trois consignes utilisées pour l'asservissement des deux moteurs sont :
- une consigne pour la fréquence de rotation des rotors (ou masselottes), qui est égale à la fréquence Fco du signal de consigne ;
- une consigne de déphasage Ψco entre l'effort généré et la consigne, qui est directement obtenue par les passages à zéro du signal COEF ;
- une consigne de déphasage ϕco entre les deux couples de masselottes, qui est obtenue à partir de la fréquence et de l'amplitude du signal de consigne selon l'expression suivante : ϕco=Arcos(UO/Umax * Amax/(4mr(2ΠF0)²)), où U0 représente l'amplitude du signal COEF, Umax représente l'amplitude maximum de ce signal, Amax représente l'amplitude maximum de l'effort (par exemple 300 daN) qui peut être généré par l'actionneur, et 4mr(2ΠF0)² représente l'amplitude de l'effort à générer ; ce calcul permet d'assurer que l'effort généré ne dépasse pas les limites de résistance du générateur.

Des modules de mesure des paramètres internes à l'actionneur permettent d'estimer l'état du système mécanique (du vibrateur) à partir des positions des masselottes. Deux capteurs de rotation (des rotors) délivrant une impulsion par tour permettent de reconstituer l'effort généré en calculant d'une part le déphasage entre les deux couples de masselottes, et d'autre part le déphasage entre un couple de masselotte et le signal de consigne.

La mesure de ces deux déphasages à l'aide de capteurs (inductifs par exemple) de résolution minimale (une seule impulsion par tour) permet de «moyenner» les valeurs sur un tour, et donc de s'affranchir des oscillations dues à la gravité.

Les signaux issus des capteurs C1 et C2 -ainsi que le signal COEF de consigne- sont de préférence traités afin d'éviter d'éventuels rebonds induits pas des parasites. Le traitement consiste en un filtrage passe bas suivi de l'application d'un seuil de commutation, pour obtenir un signal propre de type « créneau ». Le type de filtrage est choisi en fonction de la bande de fréquence dans laquelle fonctionne le vibrateur afin de limiter les retards de phase sur les signaux.

Pour la mesure du déphasage ϕm entre les signaux des capteurs C1 et C2, un des deux signaux est utilisé comme référence ; le module 20 calcule la période T de ce signal entre deux impulsions successives ; pour ce faire, un compteur est lancé au front montant du signal de référence et arrêté lors du premier front montant ultérieur de ce même signal, puis le compteur est remis à zéro par un système de bascule.

Le retard Δt entre ce signal de référence et le second signal est mesuré de la même façon ; si Δt >T/2, on peut remplacer Δt par -(T-Δt) pour recentrer le déphasage entre (+180°) et (-180°) ; le déphasage ϕ vaut alors Δt/T*360 (en degrés).

Pour la mesure du déphasage ϕm entre les deux couples de masselottes, on utilise les impulsions délivrées par les capteurs C1, C2 respectivement associés à chacun des couples de rotors, comme données d'entrée du bloc de calcul de déphasage.

Pour la mesure du déphasage Ψm entre l'effort généré et la consigne, on mesure le déphasage entre le signal COEF et celui délivré par le capteur C1 associé à un des couples de rotors, puis on ajoute (ou on retranche) ϕ/2 (suivant le couple choisi).

La régulation de chacun des moteurs est assurée par un module comportant au moins un comparateur permettant de calculer l'erreur entre une valeur de consigne extraite du signal de consigne (comme décrit ci avant) et les valeurs mesurées par l'intermédiaire des capteurs C1, C2, et au moins un régulateur permettant d'élaborer les signaux de commande COM1, COM2 à envoyer aux moteurs M1 et M2.

La régulation du moteur M2 de déphasage est une régulation simple effectuée par un régulateur PID 29.

Pour la régulation du moteur M1 d'entraînement des rotors, on fait varier la vitesse des rotors jusqu'à une fréquence proche du signal de consigne, pour pouvoir alors asservir le déphasage entre l'effort généré et la consigne ; lorsque la fréquence de rotation des rotors est très éloignée de la fréquence du signal COEF, dans le cas du démarrage du vibrateur par exemple, il est inutile de contrôler ce déphasage (cette notion de déphasage n'a pas de sens dans cette situation).

Ainsi, au démarrage, l'asservissement porte sur la fréquence de rotation sans se soucier du déphasage, l'amplitude de l'effort généré pouvant être maintenue nulle pendant ce temps : ϕco est maintenue à 180° par ouverture de l'interrupteur 38 et Ψm est maintenue à zéro par ouverture de l'interrupteur 39 ; lorsque les fréquences de la consigne et des rotors sont proches (fin du démarrage), la régulation prend en charge la phase, par fermetures des organes 38 et 39.

Les signaux COM1 et COM2 sont délivrés à deux amplificateurs de puissance (non représentés) permettant de fournir aux moteurs l'énergie dont ils ont besoin pour produire l'effort vibratoire correspondant au signal COEF de consigne d'effort.

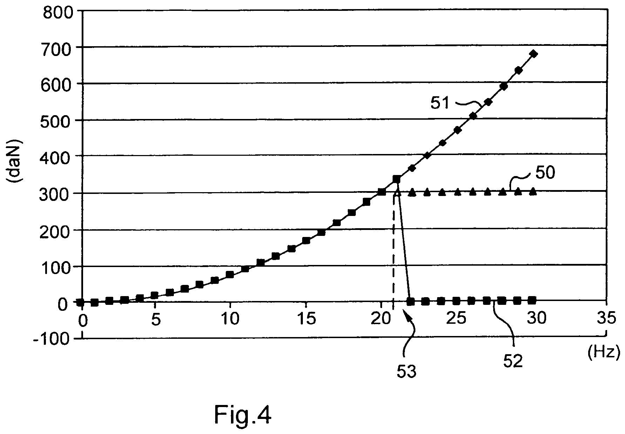

Selon une autre variante de réalisation, un circuit limiteur (non représenté) peut être prévu pour limiter l'amplitude du signal à l'entrée du régulateur 29, afin de limiter l'effort développé par le vibrateur à une valeur maximale, comme illustré par la courbe 50 figure 4 ; à cet effet, ce circuit peut recevoir en entrée la fréquence mesurée Fm de rotation des rotors ; un tel circuit permet d'éviter, à vitesse élevée, une augmentation correspondante de l'effort illustrée par la courbe 51.

Selon une autre variante, un circuit similaire peut provoquer l'annulation de l'effort généré lorsque la vitesse maximale autorisée 53 est dépassée, comme illustré par la courbe 52.

## Revendications

1. Dispositif d'asservissement d'un vibrateur à un signal (COEF) de consigne d'effort présentant une amplitude et une fréquence qui varient dans le temps, le vibrateur comportant une première paire (A) de rotors (10, 11) déséquilibrés ainsi qu'une deuxième paire (B) de rotors (12, 13) déséquilibrés, le dispositif d'asservissement comportant : un premier moteur (M1) électrique ainsi qu'un second moteur (M2) électrique, le dispositif d'asservissement comportant :
- un premier capteur (C1) de position angulaire,
- un second capteur (C2) de position angulaire,
- un premier moyen de commande (MC1) agencé pour commander le premier moteur (M1), et
- un deuxième moyen de commande (MC2) agencé pour commander le second moteur (M2) ;
- la première paire (A) de rotors (10, 11) déséquilibrés ainsi que la deuxième paire (B) de rotors (12, 13) déséquilibrés sont entraînés en rotation par le premier moteur (M1) électrique, le second moteur (M2) électrique étant agencé pour entraîner un mécanisme déphaseur et pour ajuster mécaniquement le déphasage entre les paires (A, B) de rotors du vibrateur, le dispositif d'asservissement comportant:
- le premier capteur (C1) qui est sensible à la position angulaire d'un rotor de la première paire de rotors déséquilibrés,
- le second capteur (C2) qui est sensible à la position angulaire d'un rotor de la seconde paire de rotors déséquilibrés ou bien à la position du mécanisme déphaseur,
**caractérisé en ce que**
- le premier moyen de commande (MC1) qui est sensible au signal de consigne d'effort et aux signaux délivrés par le premier capteur et par le second capteur, ce premier moyen de commande étant agencé pour commander le premier moteur (M1) en fonction de la phase et de la fréquence du signal de consigne d'effort ainsi que des signaux délivrés par les premier et second capteurs (C1, C2),
- le deuxième moyen de commande (MC2) qui est sensible au signal de consigne d'effort et aux signaux délivrés par le premier capteur et par le second capteur (C1, C2), ce deuxième moyen de commande étant agencé pour commander le second moteur (M2) en fonction de la phase, de la fréquence, et de l'amplitude du signal de consigne d'effort ainsi que des signaux délivrés par les premier et second capteurs.

2. Dispositif selon la revendication 1 dans lequel le second moyen de commande (MC2) comporte des moyens (24 à 28) de calcul d'une consigne (ϕco) de déphasage entre les deux paires de rotors en fonction de la fréquence (Fco) et de l'amplitude (Uco) du signal de consigne d'effort, ainsi qu'un premier moyen (40) de comparaison pour comparer la consigne calculée (ϕco) de déphasage et le déphasage mesuré (ϕm) entre les deux paires de rotors et délivrer un signal de commande du second moteur.

3. Dispositif selon la revendication 2 dans lequel la consigne (ϕco) de déphasage entre les deux paires de rotors est déterminée selon la formule. ϕco=Arcos(Uco/Umax*Amax/(16*m*r*π²*Fco²)), où m et r sont respectivement la masse et l'excentricité du balourd des rotors, Amax est l'effort maximal que peut exercer le vibrateur et Umax est l'amplitude du signal de consigne d'effort correspondant à cet effort maximal.

4. Dispositif selon l'une quelconque des revendications 1 à 3 dans lequel le second moyen de commande (MC2) comporte des moyens (36 à 38) de limitation du déphasage entre les deux paires de rotor -en particulier des moyens de maintien d'un déphasage de sensiblement 180° entre les deux paires de rotors- tant que l'écart entre la fréquence de rotation des rotors et la fréquence du signal de consigne est supérieur à une valeur prédéterminée.

5. Dispositif selon l'une quelconque des revendications 2 à 4 dans lequel le second moyen de commande (MC2) comporte un premier régulateur (29) recevant un signal délivré par le premier moyen de comparaison et délivrant en sortie un signal (COM2) de commande du second moteur.

6. Dispositif selon l'une quelconque des revendications 1 à 5 dans lequel le premier moyen de commande (MC1) comporte des moyens (30, 31) de mesure d'un déphasage pour déterminer un déphasage mesuré (ψm) entre l'effort généré par le vibrateur et le signal de consigne d'effort et pour commander le premier moteur en fonction de ce déphasage.

7. Dispositif selon l'une quelconque des revendications 1 à 6 qui comporte un premier moyen (23) de mesure de fréquence pour mesurer la fréquence (Fco) du signal de consigne d'effort, un second moyen (22) de mesure de fréquence pour mesurer la fréquence (Fm) de rotation d'une des paires de rotors en fonction des signaux délivrés par le premier capteur, et un second moyen (32) de comparaison pour comparer les dites fréquences (Fco et Fm) et délivrer un signal de comparaison pour la commande du premier moteur.

8. Dispositif selon les revendications 6 et 7 dans lequel le premier moyen de commande (MC1) comporte un second régulateur (33) recevant un signal délivré par le second moyen (32) de comparaison, un troisième régulateur (34) recevant un signal délivré par les moyens (30, 31) de mesure de déphasage, ainsi qu'un sommateur (35) recevant les signaux délivrés par les second et troisième régulateurs et délivrant en sortie un signal (COM1) de commande du premier moteur.

9. Dispositif selon la revendication 8, qui comporte des moyens (36, 37, 39) de maintien en sortie du troisième régulateur d'un signal sensiblement nul tant que l'écart entre la fréquence de rotation des rotors et la fréquence du signal de consigne est supérieur à une valeur prédéterminée.

10. Dispositif selon l'une quelconque des revendications 1 à 9 dans lequel le premier capteur (C1) délivre une seule impulsion par tour de rotor.

11. Dispositif selon l'une quelconque des revendications 5, 8 ou 9 dans lequel le(s) régulateur(s) (29, 33, 34) est (sont) un (des) régulateur(s) PID.

12. Dispositif selon l'une quelconque des revendications 1 à 11 qui présente une dynamique de réponse au moins égale à 100 Hertz, par exemple de l'ordre de 200 Hz environ.

## Patentansprüche

1. Vorrichtung zur Regelung eines Vibrators auf ein Kraft-Sollwert-Signal (COEF), welches eine Amplitude und eine Frequenz aufweist, die sich mit der Zeit ändern, wobei der Vibrator ein erstes Paar (A) von sich im Ungleichgewicht befindenden Rotoren (10, 11) sowie ein zweites Paar (B) von sich um Ungleichgewicht befindenden Rotoren (12, 13) aufweist, wobei die Regelungsvorrichtung aufweist: einen ersten elektrischen Motor (M1) sowie einen zweiten elektrischen Motor (M2), wobei die Regelungsvorrichtung aufweist:
- einen ersten Winkelstellungsdetektor (C1),
- einen zweiten Winkelstellungsdetektor (C2),
- ein erstes Steuermittel (MC1), welches vorgesehen ist, um den ersten Motor (M1) zu steuern, und
- ein zweites Steuermittel (MC2), welches vorgesehen ist, um den zweiten Motor (M2) zu steuern,
- wobei das erste Paar (A) von sich im Ungleichgewicht befindenden Rotoren (10, 11) sowie das zweite Paar (B) von sich im Ungleichgewicht befindenden Rotoren (12, 13) durch den ersten elektrischen Motor (M1) drehangetrieben sind, wobei der zweite elektrische Motor (M2) vorgesehen ist, um einen Phasenverschiebermechanismus anzutreiben und um die Phasenverschiebung zwischen den Paaren (A, B) von Rotoren des Vibrators mechanisch zu justieren, wobei die Regelungsvorrichtung aufweist:
- den ersten Detektor (C1), der die Winkelstellung eines Rotors des ersten Paares von Rotoren im Ungleichgewicht erfasst,
- den zweiten Detektor (C2), der die Winkelstellung eines Rotors des zweiten Paares von Rotoren im Ungleichgewicht oder die Position des Phasenverschiebermechanismus' erfasst,
**dadurch gekennzeichnet, dass**
- das erste Steuermittel (MC1) das Kraft-Sollwert-Signal und die von dem ersten Detektor und dem zweiten Detektoren gelieferten Signale erfasst, wobei das erste Steuermittel eingerichtet ist, um den ersten Motor (M1) in Abhängigkeit von der Phase und der Frequenz des Kraft-Sollwert-Signals sowie den von dem ersten und dem zweiten Detektor (C1, C2) gelieferten Signalen zu steuern,
- das zweite Steuermittel (MC2) das Kraft-Sollwert-Signal und von dem ersten Detektor und dem zweiten Detektor (C1, C2) gelieferte Signale erfasst, wobei das zweite Steuermittel eingerichtet ist, um den zweiten Motor (M2) in Abhängigkeit von der Phase, der Frequenz und der Amplitude des Kraft-Sollwert-Signals sowie von den von dem ersten und dem zweiten Detektor gelieferten Signalen zu steuern.

2. Vorrichtung nach Anspruch 1, bei der das zweite Steuermittel (MC2) Mittel (24 bis 28) zur Berechnung eines Sollwerts (ϕco) der Phasenverschiebung zwischen den beiden Paaren von Rotoren in Abhängigkeit von der Frequenz (Fco) und der Amplitude (Uco) des Kraft-Sollwert-Signals aufweist, sowie ein erstes Vergleichsmittel (40) zum Vergleichen des berechneten Phasenverschiebungs-Sollwertes (ϕco) mit der gemessenen Phasenverschiebung (ϕm) zwischen zwei Paaren von Rotoren und zum Liefern eines Steuersignals des zweiten Motors.

3. Vorrichtung nach Anspruch 2, bei der der Sollwert (ϕco) der Phasenverschiebung zwischen den beiden Rotorpaaren gemäß der Formel ϕco = Arcos (Uco/Umax*Amax/(16*m*r*π²*Fco²)) bestimmt wird, wobei m und r die Masse und die Exzentrizität der Unwucht des Rotors sind, Amax die maximale Kraft ist, die der Vibrator erzeugen kann, und Umax die Amplitude des Kraft-Sollwert-Signals ist, die dieser maximalen Kraft entspricht.

4. Vorrichtung nach einem der Ansprüche 1 bis 3, bei der das zweite Steuermittel (MC2) Mittel (36 bis 38) zur Begrenzung der Phasenverschiebung zwischen den beiden Rotorpaaren aufweist, insbesondere Mittel zum Beibehalten einer Phasenverschiebung von ungefähr 180° zwischen den beiden Rotorpaaren, solange der Unterschied zwischen der Rotationsfrequenz der Rotoren und der Frequenz des Sollwert-Signals größer als ein vorbestimmter Wert ist.

5. Vorrichtung nach einem der Ansprüche 2 bis 4, bei der das zweite Steuermittel (MC2) einen ersten Regler (29) aufweist, der ein Signal empfängt, das von dem ersten Vergleichsmittel geliefert wird, und der am Ausgang ein Signal (COM2) zur Steuerung des zweiten Motors liefert.

6. Vorrichtung nach einem der Ansprüche 1 bis 5, bei der das erste Steuermittel (MC1) Mittel (30, 31) zur Messung einer Phasenverschiebung aufweist zum Bestimmen einer gemessenen Phasenverschiebung (ψm) zwischen der Kraft, die von dem Vibrator erzeugt wird, und dem Kraft-Sollwert-Signal, und um den ersten Motor in Abhängigkeit von dieser Phasenverschiebung zu steuern.

7. Vorrichtung nach einem der Ansprüche 1 bis 6, welche ein erstes Mittel (23) zur Messung einer Frequenz aufweist, um die Frequenz (Fco) des Kraft-Sollwert-Signals zu messen, welche ein zweites Mittel (22) zum Messen einer Frequenz aufweist, um die Rotationsfrequenz (Fm) eines der Rotorpaare in Abhängigkeit von von dem ersten Detektor gelieferten Signalen zu messen, und welche ein zweites Vergleichsmittel (32) aufweist zum Vergleichen der Frequenzen (Fco und Fm) und zum Liefern eines Vergleichssignals für die Steuerung des ersten Motors.

8. Vorrichtung nach den Ansprüchen 6 und 7, bei der das erste Steuermittel (MC1) einen zweiten Regler (33) aufweist, der ein von dem zweiten Vergleichsmittel (32) geliefertes Signal empfängt, einen dritten Regler (34), der ein von den Mitteln (30, 31) zur Messung der Phasenverschiebung geliefertes Signal empfängt, sowie ein Summierglied (35), welches die von den zweiten und dritten Reglern gesendeten Signale empfängt und am Ausgang ein Signal (COM1) zur Steuerung des ersten Motors liefert.

9. Vorrichtung nach Anspruch 8, welche Mittel (36, 37, 39) zum Halten eines Signals am Ausgang des dritten Reglers, welches im Wesentlichen Null ist, solange der Unterschied zwischen der Rotationsfrequenz der Rotoren und der Frequenz des Sollwert-Signals größer als ein vorbestimmter Wert ist, aufweist.

10. Vorrichtung nach einem der Ansprüche 1 bis 9, bei der der erste Detektor (C1) einen einzigen Puls pro Umdrehung des Rotors liefert.

11. Vorrichtung nach einem der Ansprüche 5, 8 oder 9, bei der der bzw. die Regler (29, 33, 34) ein PID-Regler ist bzw. PID-Regler sind.

12. Vorrichtung nach einem der Ansprüche 1 bis 11, die eine Reaktionsdynamik von mindestens 100 Hz, zum Beispiel von etwa größenordnungsmäßig 200 Hz aufweist.

## Claims

1. Device for servo-controlling a vibrator to a force setpoint signal (COEF) having an amplitude and a frequency that vary over time, the vibrator comprising a first pair (A) of unbalanced rotors (10, 11) and a second pair (B) of unbalanced rotors (12, 13), the servo-control device comprising a first electric motor (M1) and a second electric motor (M2), the servo-control device comprising:
- a first angular position sensor (C1),
- a second angular position sensor (C2),
- a first control means (MC1) arranged to control the first motor (M1), and
- a second control means (MC2) arranged to control the second motor (M2),
- the first pair (A) of unbalanced rotors (10, 11) and the second pair (B) of unbalanced rotors (12, 13) are driven in rotation by the first electric motor (M1), the second electric motor (M2) being arranged to drive a phase shifter mechanism and to adjust mechanically the phase shift between the pairs (A, B) of rotors of the vibrator, the servo-control device comprising:
- the first sensor (C1) which is sensitive to the angular position of a rotor of the first pair of unbalanced rotors,
- the second sensor (C2) which is sensitive to the angular position of a rotor of the second pair of unbalanced rotors or to the position of the phase shifter mechanism, **characterized in that**
- the first control means (MC1) which is sensitive to the force setpoint signal and to the signals delivered by the first sensor and by the second sensor, said first control means being arranged to control the first motor (M1) as a function of the phase and the frequency of the force setpoint signal and also as a function of the signals delivered by the first and second sensors (C1, C2),
- the second control means (MC2) which is sensitive to the force setpoint signal and to the signals delivered by the first sensor and by the second sensor (C1, C2), said second control means being arranged to control the second motor (M2) as a function of the phase, the frequency and the amplitude of the force setpoint signal and also as a function of the signals delivered by the first and second sensors.

2. Device according to claim 1, in which the second control means (MC2) comprises means (24 to 28) for calculating a phase shift setpoint (ϕco) between the two pairs of rotors as a function of the frequency (Fco) and the amplitude (Uco) of the force setpoint signal, and also a first comparator means (40) for comparing the calculated phase shift setpoint (cpco) and the measured phase shift (ϕm) between the two pairs of rotors and for delivering a control signal for the second motor.

3. Device according to claim 2, in which the phase shift setpoint (cpco) between the two pairs of rotors is determined according to the formula: ϕco=Arcos (Uco/Umax*Amax/(16*m*r*π²*Fco²)), where m and r are respectively the mass and the eccentricity of the rotor unbalance, Amax is the maximum force that the vibrator can exert, and Umax is the amplitude of the force setpoint signal corresponding to said maximum force.

4. Device according to any one of claims 1 to 3, in which the second control means (MC2) comprises means (36 to 38) for limiting the phase shift between the two pairs of rotors - in particular means for maintaining a phase shift of substantially 180° between the two pairs of rotors - for as long as the difference between the rotation frequency of the rotors and the frequency of the setpoint signal is greater than a predetermined value.

5. Device according to any one of claims 2 to 4, in which the second control means (MC2) comprises a first regulator (29) receiving a signal delivered by the first comparator means and outputting a control signal (COM2) for the second motor.

6. Device according to any one of claims 1 to 5, in which the first control means (MC1) comprises means (30, 31) for measuring a phase shift in order to determine a measured phase shift (ψm) between the force generated by the vibrator and the force setpoint signal and to control the first motor as a function of said phase shift.

7. Device according to any one of claims 1 to 6, which comprises a first frequency measurement means (23) for measuring the frequency (Fco) of the force setpoint signal, a second frequency measurement means (22) for measuring the rotation frequency (Fm) of one of the pairs of rotors as a function of the signals delivered by the first sensor, and a second comparator means (32) for comparing said frequencies (Fco and Fm) and for outputting a comparison signal for controlling the first motor.

8. Device according to claims 6 and 7, in which the first control means (MC1) comprises a second regulator (33) receiving a signal delivered by the second comparator means (32), a third regulator (34) receiving a signal delivered by the phase shift measurement means (30, 31), and a summing circuit (35) receiving the signals delivered by the second and third regulators and outputting a control signal (COM1) for the first motor.

9. Device according to claim 8, which comprises means (36, 37, 39) for maintaining at the output of the third regulator a signal that is substantially zero for as long as the difference between the rotation frequency of the rotors and the frequency of the setpoint signal is greater than a predetermined value.

10. Device according to any one of claims 1 to 9, in which the first sensor (C1) delivers a single pulse per revolution of the rotor.

11. Device according to any one of claims 5, 8 or 9, in which the regulator(s) (29, 33, 34) are PID regulator(s).

12. Device according to any one of claims 1 to 11, which has a dynamic response at least equal to 100 Hertz, for example of around 200 Hz.
